# EUROPÄISCHE PATENTANMELDUNG

(11) **EP 4 411 248 A1**
(43) Veröffentlichungstag der Anmeldung: **07.08.2024**
(21) Anmeldenummer: 24150489.3
(22) Anmeldetag: 05.01.2024
(51) Int. Cl.: F24C 7/08, A47J 27/00, H05B 1/02

(54) **NUTZUNG VON RESTWÄRME IN EINEM GARGERÄT**

(30) Priorität: 01.02.2023 DE 102023200814
(71) Anmelder: BSH Hausgeräte GmbH, 81739 München (DE)
(72) Erfinder: Horst, Gerald, 76131 Karlsruhe (DE); Hage, Clemens, 81829 München (DE); Michel, Florian, 85658 Egmatting (DE); Schaefer, Frank, 82178 Puchheim (DE); Franke, Corinna, 85354 Freising (DE); Rychly, Leonard, 81541 München (DE); Koene, Philip, 81245 München (DE); Mikusch, Michael, 81735 München (DE)

(57) **Zusammenfassung**

Ein Verfahren (200) zum Nutzen von Restwärme in einem Gargerät (105) umfasst Schritte des Bestimmens (220) einer Restwärme, die nach dem Garen eines ersten Gerichts (140) im Gargerät (105) zur Verfügung steht; und des Bestimmens (230) eines zweiten Gerichts (145), das mittels der Restwärme gegart werden kann.

## Beschreibung

Die vorliegende Erfindung betrifft ein Gargerät. Insbesondere betrifft die Erfindung ein Haushaltsgerät, das dazu eingerichtet ist, eine Speise oder ein Gericht unter Wärmezufluss zu garen.

Ein Backofen in einem Haushalt ist dazu eingerichtet, eine Speise auf eine vorbestimmte Temperatur zu erwärmen und dadurch zu garen. Übliche Gartemperaturen liegen meist in einem Bereich von ca. 60 °C bis ca. 260 °C. Ein Garraum des Gargeräts ist üblicherweise thermisch gut isoliert, um einen unkontrollierten Wärmeverlust zu vermeiden. Trotzdem ist nach dem Abschluss des Garvorgangs im Gargerät eine beträchtliche Menge thermischer Energie gespeichert, die in der Regel ungenutzt bleibt.

CH 678 996 A5 schlägt vor, einen Backofen während des Garens einer Speise vorzeitig abzuschalten und eine im Backofen gespeicherte Restwärme für den Garvorgang auszunutzen.

EP 311 813 betrifft ein Verfahren zum Steuern eines Backofens zur Ausnutzung von Restwärme. Dazu wird eine Speise zunächst bei eingeschaltetem und danach bei ausgeschaltetem Ofen gegart. Anschließend kann der Backofen dazu angesteuert werden, die in ihm befindliche Speise unterhalb der Gartemperatur unter geringer Energiezufuhr warmzuhalten.

Verschiedene Speisen sind unterschiedlich gut geeignet, mittels Restwärme eines Backofens gegart zu werden. Ein empfindliches Gericht, wie beispielsweise ein Soufflé, kann eine genaue Temperatursteuerung erfordern, die mit Restwärme schwer zu erzielen ist. Andere Speisen, beispielsweise Pizza, benötigen eine starke Energiezufuhr, um ein gewünschtes Garergebnis zu erzielen. Häufig ist es schwierig, zu entscheiden, welches Gericht in welcher Weise mit Restwärme gegart werden kann. Wird das Gericht nicht ausreichend gegart, so kann der Garprozess unvollständig und das Gericht ungenießbar sein. Wird das Gericht zu stark gegart, so kann es verderben und ebenfalls nicht für den Verzehr geeignet sein.

Eine der vorliegenden Erfindung zu Grunde liegende Aufgabe besteht in der Bereitstellung einer verbesserten Technik zur Nutzung von Restwärme in einem Gargerät. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Nutzen von Restwärme in einem Gargerät Schritte des Bestimmens einer Restwärme, die nach dem Garen eines ersten Gerichts im Gargerät zur Verfügung steht; und des Bestimmens eines zweiten Gerichts, das mittels der Restwärme gegart werden kann.

Das Gargerät kann beispielsweise einen Backofen, einen Wärmeschrank oder einen Sous-Vide Garer umfassen. Es ist bevorzugt, dass das erste Gericht auf konventionelle Weise gegart wird, wobei mittels einer Heizung des Gargeräts Wärme bis zum Garende des ersten Gerichts zugeführt werden kann. Optional kann die Heizung auch schon vor dem Garende abgeschaltet werden, um das erste Gericht zumindest teilweise mit Restwärme des Gargeräts zu garen. Die verbleibende Restwärme wird bevorzugt zum Garen eines anderen Gerichts genutzt. Das andere Gericht kann beispielsweise eine Ergänzung oder eine Beilage für das erste Gericht umfassen. Alternativ kann das zweite Gericht auch beispielsweise eine Nachspeise umfassen, die nach dem ersten Gericht verzehrt werden soll.

Eine Auswahl eines zweiten Gerichts, das mittels der bestimmten Restwärme noch sicher gegart werden kann, kann dadurch erleichtert sein. Ein experimentelles Annähern an ein Garvermögen eines Gargeräts mit Restwärme kann entfallen. Bereitstehende Restwärme kann verbessert genutzt werden. Dadurch kann ein Beitrag zum Einsparen von Energie geleistet werden.

Das zweite Gericht kann auf der Basis eines Temperaturverlaufs bestimmt werden, der sich bei abgeschalteter Wärmezufuhr im Gargerät zeigt. Der Temperaturverlauf kann auf der Basis einer aktuellen Temperatur und eines Abkühlverhaltens des Gargeräts bestimmt werden. Das Abkühlverhalten kann eine gerätetypische Eigenschaft sein, die im Wesentlichen von einer Innen- und einer Außentemperatur abhängt. Die Außentemperatur entspricht dabei einer Wohnraumtemperatur, die relativ wenig variiert. Die Innentemperatur kann mittels eines Sensors bestimmt werden. Eine Wärmekapazität des Gargeräts kann experimentell bestimmt und für eine zukünftige Verwendung abgespeichert sein. In einer Ausführungsform ist die Wärmekapazität des Gargeräts in Form einer Herstellerangabe bereitgestellt. Die Angabe kann einen Gerätetyp betreffen, dem das vorliegende Gargerät zugeordnet ist.

In einer Ausführungsform sind Wärmekapazitäten für eine Vielzahl unterschiedlicher Gargeräte für die Anwendung des Verfahrens hinterlegt. In einer anderen Ausführungsform kann die Wärmekapazität des Gargeräts bereits während eines Aufheizvorgangs bestimmt werden. Es kann bestimmt werden, welcher Temperaturverlauf sich im Garraum ergibt, wenn eine Heizung des Gargeräts eingeschaltet ist und sich kein Gericht im Garraum befindet. Anders ausgedrückt: kann eine Impulsantwort der Temperatur im Garraum auf eine vorbestimmte Wärmezufuhr bestimmt werden. Eine solchermaßen bestimmte Wärmekapazität kann der Bestimmung des Temperaturverlaufs beim Abkühlen zu Grunde gelegt werden.

In einer weiteren Ausführungsform wird ein Verlauf einer Temperatur im Gargerät auf der Basis einer Temperatur beim Einlegen des zweiten Gerichts und vom zweiten Gericht umfassten Zutaten bestimmt. So kann berücksichtigt werden, welche Wärmemenge die Zutaten des zweiten Gerichts aus dem Garraum aufnimmt, bis ein energetisches Gleichgewicht erreicht ist. Außerdem kann berücksichtigt werden, welche küchenchemische Reaktionswärme durch die Zutaten des zweiten Gerichts während des Garvorgangs aufgenommen wird. Dazu kann eine Art von Zutaten, deren Kombination und/oder ein zu berücksichtigender küchenchemischer Prozess berücksichtigt werden. Insbesondere kann bestimmt werden, welche Temperatur die Zutaten mindestens erreichen müssen, damit eine beabsichtigte küchenchemische Reaktion stattfinden kann. Wird diese Temperatur unterschritten, so kann der Garvorgang nicht weitergeführt werden.

Es ist außerdem bevorzugt, dass eine Gardauer des zweiten Gerichts auf der Basis des Verlaufs der Temperatur bestimmt wird. Solange eine vorbestimmte Gartemperatur überschritten ist, kann gelten, dass eine niedrigere Temperatur zu einer längeren Gardauer führt. Da die Temperatur im Garraum mangels Energiezufuhr stetig abnimmt, kann eine Gardauer des zweiten Gerichts größer sein, als wenn die Temperatur konstant gehalten würde. Durch das Bestimmen der veränderten Gardauer kann das zweite Gericht verbessert zu einem vorbestimmten Zeitpunkt fertig gegart sein. Ein Öffnen des Garraums zur Kontrolle der Temperatur des zweiten Gerichts, wodurch Restwärme verloren ginge, kann vermieden werden.

Weiter bevorzugt wird das zweite Gericht auf der Basis einer benutzergesteuerten Vorgabe bestimmt. Die Vorgabe kann beispielsweise eine Kategorie des zweiten Gerichts umfassen, etwa eine Nachspeise, eine Beilage oder eine Sauce. Die Vorgabe kann auch eine Menge betreffen, beispielsweise 2, 4 oder 6 Portionen. In einer anderen Ausführungsform kann die Vorgabe eine Zeit betreffen, die für eine Vorbereitung oder das Garen des zweiten Gerichts erforderlich ist.

Zu einem vorbestimmten zweiten Gericht kann eine maximal mittels der Restwärme zu garende Menge bestimmt werden. Gleichzeitig kann bestimmt werden, ob die Menge in Anbetracht des zweiten Gerichts sinnvoll ist oder nicht. So kann beispielsweise davor gewarnt werden, nur 100 g Brot oder nur eine Kartoffel zu garen. Eine Entscheidung, ob die bestimmte Menge sinnvoll ist oder nicht, kann auch einem Benutzer überlassen werden.

In einer weiteren Ausführungsform kann das Garen des zweiten Gerichts im Gargerät gesteuert werden. Beispielsweise kann das Gargerät dazu angesteuert werden, möglichst wenig der Restwärme nach außen abzuführen. Beispielsweise kann das Öffnen einer Gerätetür verhindert sein. Außerdem kann ein Erwärmungsmodus eingestellt werden, der die Restwärme optimal nutzt. Sinkt die Temperatur im Garraum unter einen vorbestimmten Wert ab, so kann beispielsweise ein Ventilator aktiviert werden, um verbleibende Wärme verbessert im Gerät zu zirkulieren.

Das Auswählen des zweiten Gerichts kann mit Bezug auf eine Sammlung von Rezepten erfolgen. Es ist bevorzugt, dass zu einem ausgewählten zweiten Gericht Informationen zu dessen Zubereitung bereitgestellt werden. Die Informationen können insbesondere Verarbeitungsschritte, Zutaten und deren Mengen betreffen. Auch eine Verarbeitungs- oder Ruhezeit kann angegeben werden.

Die bestimmten Informationen können teilweise oder vollständig an eine Küchenmaschine übermittelt werden. Die Küchenmaschine kann ein Multifunktionsgerät umfassen, das beispielsweise rühren, kneten, schneiden und raspeln kann. Eine fortgeschrittenere Küchenmaschine umfasst eine Waage, mit der die Menge einer zugefügten Zutat bestimmt werden kann. Die Küchenmaschine kann auch eine Heizung umfassen, um Zutaten zu erwärmen. Außerdem kann eine zeitliche Ablaufsteuerung vorgesehen sein, sodass die Küchenmaschine eine Sequenz von Verarbeitungsschritten automatisch durchführen kann. Mittels der Küchenmaschine kann beispielsweise eine Füllung oder ein Teig bereitgestellt werden, der dann in dem Gargerät gegart werden kann.

Es ist ferner bevorzugt, dass das zweite Gericht derart bestimmt wird, dass das erste Gericht nicht vor dem Ende einer Vorbereitungszeit für das zweite Gericht fertig gegart ist. Anders ausgedrückt kann das zweite Gericht derart gewählt werden, dass es möglichst vollständig vorbereitet werden kann, während das erste Gericht gegart wird. So kann das dann bereitstehende zweite Gericht möglichst unverzüglich nach dem Entfernen des ersten Gerichts aus dem Gargerät in das Gargerät eingelegt werden. Ein Verlust von Restwärme, während das erste Gericht bereits aus dem Garraum entfernt wurde, das zweite Gericht aber noch nicht eingelegt werden kann, kann vermieden werden. In einer weiteren Ausführungsform kann zwischen dem Ausschalten der Heizung, üblicherweise beim Entnehmen des ersten Gerichts, und dem Einlegen des zweiten Gerichts ein Ventilator oder eine Umwälzpumpe im Garraum deaktiviert werden. So kann ein Verlust von Wärme aus dem Garraum minimiert sein.

Nach einem weiteren Aspekt der vorliegenden Erfindung umfasst eine Vorrichtung zur Nutzung von Restwärme in einem Gargerät eine Einrichtung zur Bestimmung einer Restwärme, die nach dem Garen eines ersten Gerichts im Gargerät zur Verfügung steht; und eine Einrichtung zur Bestimmung eines zweiten Gerichts, das mittels der Restwärme gegart werden kann.

Die Vorrichtung kann eine Sammlung zweiter Gerichte verwenden, die alternativ in einem lokalen Datenspeicher oder in einer externen Ressource bereitgehalten sein kann.

Die Verarbeitungseinrichtung kann dazu eingerichtet sein, ein hierin beschriebenes Verfahren ganz oder teilweise auszuführen. Dazu kann die Verarbeitungseinrichtung elektronisch ausgeführt sein und beispielsweise einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Nicht beschränkende Ausführungsformen der Erfindung werden nun unter Bezug auf die beiliegenden Figuren genauer beschrieben, in denen:
- Figur 1: ein System;
- Figur 2: ein Ablaufdiagramm eines Verfahrens; und
- Figur 3: Verläufe von Temperaturen an einem Gargerät
darstellt.

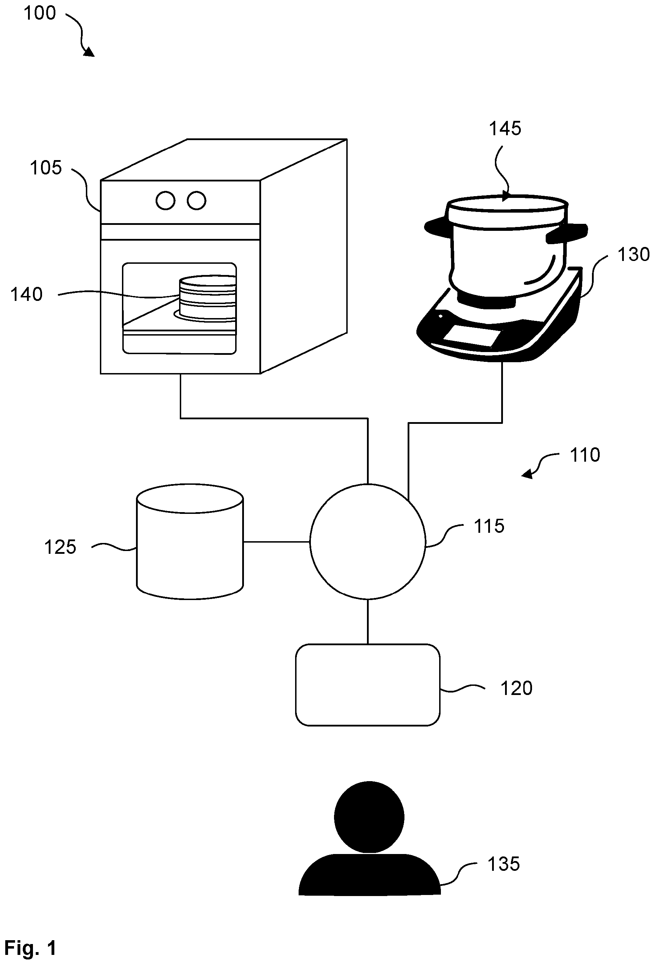

Figur 1 zeigt ein System 100 zur Nutzung von Restwärme in einem Gargerät 105. Das System 100 umfasst eine Vorrichtung 110, die mit dem Gargerät 105 gekoppelt sein kann. Die Vorrichtung 110 umfasst eine Verarbeitungseinrichtung 115, eine Interaktionseinrichtung 120 sowie einen optionalen Datenspeicher 125. Bevorzugt kann die Vorrichtung 110 mit einer Küchenmaschine 130 verbunden werden.

Die Interaktionseinrichtung 120 umfasst eine Eingabeeinrichtung und/oder eine Ausgabeeinrichtung zur Kommunikation mit einem Benutzer 135. Der Benutzer 135 kann beispielsweise eine Vorgabe oder eine Anfrage formulieren und ein Ergebnis der Vorrichtung 110 über die Interaktionseinrichtung 120 erfassen.

Der Datenspeicher 125 ist zur Ablage von Informationen bezüglich einer Vielzahl Gerichte eingerichtet. Alternativ kann auch eine externe Ressource genutzt werden, an der die Informationen über die Gerichtet vorgehalten sind. Die Ressource kann beispielsweise einen Server oder einen Dienst in einer Cloud umfassen.

In einer Ausführungsform umfassen die Informationen eine Sammlung von Kochrezepten. Die Informationen können gegliedert oder durchsuchbar sein, um das Auffinden eines passenden Gerichts zu erleichtern. Es ist außerdem bevorzugt, dass die Informationen einen Hinweis auf ein Garverhalten eines beschriebenen Gerichts umfassen. Das Garverhalten kann eine mindestens einzuhaltende Gartemperatur, eine übliche Gardauer, eine bevorzugte Gartemperatur oder eine zum Garen aufgenommene Energiemenge betreffen.

Die Küchenmaschine 130 ist bevorzugt dazu eingerichtet, einen Benutzer 135 bei der Zubereitung oder Vorbereitung eines Gerichts zu unterstützen. Dazu kann die Küchenmaschine 130 vorbestimmte Verarbeitungsschritte, beispielsweise Zerkleinern, Mahlen, Vermengen, Kneten, Wiegen etc. automatisiert oder teilweise automatisiert durchführen. In einer Ausführungsform kann die Küchenmaschine 130 durch die Verarbeitungseinrichtung 115 dazu angesteuert werden, einen vorbestimmten Verarbeitungsschritt durchzuführen.

Im Gargerät 105 befindet sich zum Garen ein erstes Gericht 140. Um eine Restwärme des Gargeräts 105 zu nutzen, wenn das erste Gericht 140 aus dem Gargerät 105 entfernt und die Energiezufuhr des Geräts 105 abgeschaltet ist, soll ein zweites Gericht 145 eingelegt und möglichst ohne weitere Energieaufnahme des Gargeräts 105 gegart werden. Die Vorrichtung 110 kann einen Benutzer 135 bei der Auswahl eines passenden zweiten Gerichts 145 sowie optional bei dessen Vorbereitung oder der Planung eines zeitlichen Ablaufs des Garens unterstützen.

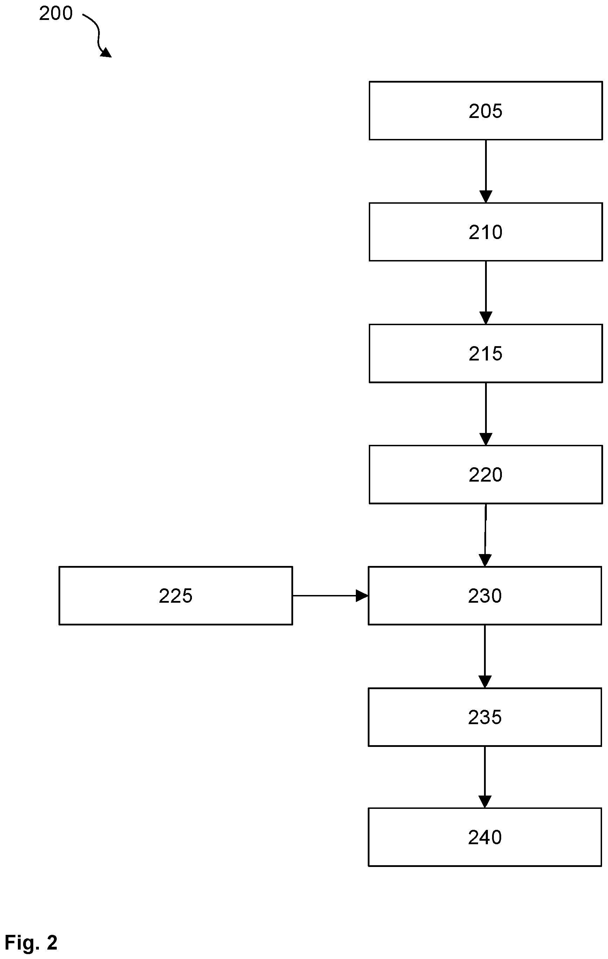

Figur 2 zeigt ein Ablaufdiagramm eines Verfahrens 200 zum Nutzen von Restwärme in einem Gargerät 105.

In einem Schritt 205 kann ein erster Garvorgang erfasst werden, der das Garen eines ersten Gerichts 140 im Gargerät 105 umfasst. Insbesondere kann bestimmt werden, bei welcher Temperatur der Garvorgang erfolgt beziehungsweise welche Temperatur das Gargerät aufweist, wenn der erste Garvorgang abgeschlossen ist. In einer weiteren Ausführungsform kann diese Bestimmung durch Beobachten von Betriebsparametern des Gargeräts 105 erfolgen.

In einem Schritt 210 kann ein Ende des ersten Garvorgangs bestimmt werden. Das Ende kann beispielsweise in Abhängigkeit des ersten Gerichts 140 und der gewählten Gartemperatur im Gargerät 105 bestimmt werden. Das Ende des ersten Garvorgangs kann auch beispielsweise durch manuelle Eingabe eines Benutzers 135 bestimmt werden.

In einem Schritt 215 kann ein zum Garen des ersten Gerichts 140 bestimmtes Gargerät 105 bestimmt werden. In einer Ausführungsform kann ein Gerätetyp abgefragt beziehungsweise durch den Benutzer 135 eingegeben werden. In einer anderen Ausführungsform kann ein charakteristisches Merkmal des Gargeräts 105 bezüglich seiner Wärmekapazität auch experimentell bestimmt werden. In einer besonders bevorzugten Ausführungsform wird hierzu eine Impulsantwort einer Temperatur des Gargeräts 105 auf das Aktivieren einer Heizung ausgewertet.

In einem Schritt 220 kann eine nutzbare Restwärme im Gargerät 105 bestimmt werden. Dazu kann berücksichtigt werden, wie viel Energie im Gargerät 105 gespeichert ist, wenn das erste Gericht 140 aus ihm entfernt und das zweite Gericht 145 eingelegt wird. Außerdem kann bestimmt werden, welche Temperatur dann in einem Garraum des Gargeräts 105 herrscht. Ein Abkühlverhalten des Gargeräts aufgrund von unvermeidlicher Abgabe von Wärme an eine Umgebung des Gargeräts 105 kann ebenfalls berücksichtigt werden.

In einem Schritt 225 kann eine Benutzervorgabe eines Benutzers 135 erfasst werden. Die Benutzervorgabe kann ein Kriterium zur Auswahl eines zweiten Gerichts 145 aus einer Vielzahl bekannter zweiter Gerichte 145 umfassen. Beispielsweise kann die Benutzervorgabe eine Art des zweiten Gerichts 145 (Beilage, Nachspeise etc.), eine geforderte Menge oder eine Art (zum Beispiel Gebäck, Mehlspeise, Auflauf) umfassen.

Auf der Basis der bestimmten nutzbaren Restwärme und der Benutzervorgabe kann in einem Schritt 230 ein Rezeptvorschlag für ein zweites Gericht 145 bestimmt werden. Der Rezeptvorschlag kann Informationen umfassen, welche Tätigkeiten oder Voraussetzungen zur Umsetzung des Rezepts erfüllt werden müssen. Der Benutzer 135 kann sich für ein Rezept entscheiden oder durch Angabe weiterer Vorgaben im Schritt 225 weitere Vorschläge generieren.

In einer Ausführungsform kann bestimmt werden, welche Menge beziehungsweise wie viele Portionen eines gewählten zweiten Gerichts 145 mit der im Gargerät 105 bestimmten Restwärme maximal gegart werden kann. In einer Variante kann der Benutzer 135 im Schritt 225 umgekehrt vorgeben, wie viele Portionen beziehungsweise welche Menge des zweiten Gerichts 145 zubereitet werden sollen. Rezepte, die in der gewünschten Menge mit der verfügbaren Restwärme nicht sicher gegart werden können, können aus den Vorschlägen entfernt werden. Der Benutzer 135 kann sich für einen der Vorschläge entscheiden oder durch Ändern seiner Vorgaben im Schritt 225 die Bestimmung neuer Rezeptvorschläge im Schritt 230 interaktiv anfordern.

Hat sich der Benutzer 135 für ein Rezept für ein zweites Gericht 145 entschieden, so kann er in einem Schritt 235 zur Vorbereitung eines zweiten Vorgangs des zweiten Gerichts 145 angeleitet werden. Dazu können ihm notwendige Informationen wie Zutaten, Mengen und Verarbeitungsschritte dargeboten werden. Optional kann der Benutzer 135 unter Nutzung der Küchenmaschine 130 bei der Zubereitung beziehungsweise Vorbereitung des zweiten Gerichts 145 unterstützt werden.

Anschließend kann der Benutzer 135 das zweite Gericht 145 in das Gargerät 105 einlegen. Bevorzugt wird zum selben Zeitpunkt oder möglichst kurz davor das erste Gericht 140 aus dem Garraum des Gargeräts 105 entfernt. Außerdem ist bevorzugt, dass eine Wärmezufuhr des Gargeräts 105 zum Zeitpunkt des Einlegens des zweiten Gerichts 145 bereits deaktiviert ist.

In einem Schritt 240 kann der zweite Garvorgang des zweiten Gerichts 145 im Gargerät 105 gesteuert werden. Dazu kann beispielsweise eine Frischluftzufuhr oder ein Ventilator in einem Garraum des Gargeräts 105 so gesteuert werden, dass die im Gerät verbliebene Restwärme möglichst gut zum Garen des zweiten Gerichts 145 verwendet werden kann. Ist eine vorbestimmte Gardauer, die auf der Basis des gewählten zweiten Gerichts 145, einer umgesetzten Menge und einer nutzbaren Restwärme im Gargerät 105 bestimmt sein kann, verstrichen, so kann der Benutzer 135 zur Entnahme des fertigen zweiten Gerichts 145 aufgefordert werden.

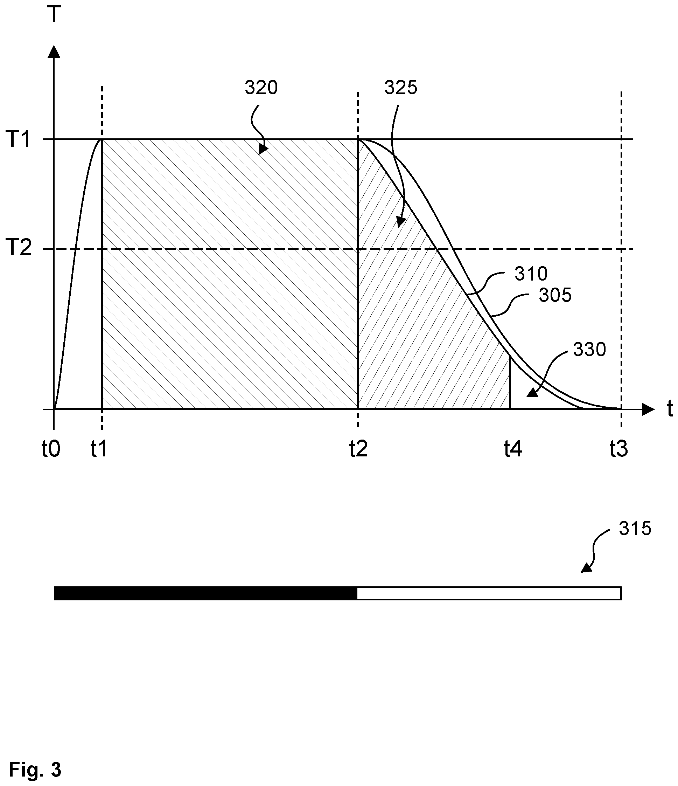

Figur 3 zeigt beispielhafte Verläufe von Temperaturen an einem Gargerät 105. Es ist zu beachten, dass die dargestellten Verläufe rein exemplarisch und in qualitativer Weise dargestellt sind. In horizontaler Richtung ist eine Zeit und in vertikaler Richtung eine Temperatur im Gargerät 105 dargestellt.

Ein erster Temperaturverlauf 305 betrifft ein übliches Zubereiten eines ersten Gerichts 140 im Gargerät 105. Ein zweiter Temperaturverlauf 310 betrifft die Nutzung von Restwärme zum Garen eines zweiten Gerichts 145. In einem unteren Bereich von Figur 3 ist qualitativ eine Aktivierung 315 einer Heizeinrichtung des Gargeräts 105 über die Zeit dargestellt.

Zu einem Zeitpunkt t0 wird die Heizeinrichtung eingeschaltet, um das Gargerät 105 auf eine vorbestimmte Gartemperatur T1 für das erste Gericht 140 aufzuheizen. Das Gerät 105 erreicht diese Temperatur zu einem Zeitpunkt t1. Anschließend kann das erste Gericht 140 in einen Garraum des Gargeräts 105 eingelegt und gegart werden. Nach einer vorbestimmten Dauer ist das erste Gericht 140 zu einem Zeitpunkt t2 vollständig gegart und kann aus dem Gerät 105 entnommen werden. Gleichzeitig oder auch bereits davor kann die Heizeinrichtung des Gargeräts 105 abgeschaltet werden, wie durch einen hellen Bereich der Aktivierung 315 symbolisiert ist.

Danach kühlt das Gargerät 105 langsam aus und erreicht zu einem Zeitpunkt t3 die Temperatur einer Umgebung. Bei diesem Vorgang wird im Wesentlichen Energie genutzt, die zwischen den Zeitpunkten t1 und t2 als erste Fläche 320 unter dem ersten Temperaturverlauf 305 dargestellt ist. Optional kann das erste Gericht 140 auch bereits während des Aufheizens des Gargeräts 105 in dieses eingelegt werden; in diesem Fall kann ein entsprechender Anteil der Fläche zwischen t0 und t1 unter dem ersten Verlauf 305 zur ersten Fläche 320 gezählt werden. Eine zweite Fläche 325 zwischen den Zeitpunkten t2 und t3 unterhalb des ersten Verlaufs 305 zeigt eine Energiemenge, die ungenutzt bleibt.

Wird zum Zeitpunkt t2 das zweite Gericht 145 in das Gargerät 105 eingelegt, während die Heizeinrichtung abgeschaltet ist, so kann sich zwischen den Zeitpunkten t2 und t3 der zweite Temperaturverlauf 310 ergeben. Dieser sinkt insgesamt schneller als der erste Temperaturverlauf 305 ab, da das zweite Gericht 145 Wärme aus dem Gargerät 105 aufnimmt. Eine zweite Fläche 325 repräsentiert eine zum Garen des zweiten Gerichts 145 verwendete Energie. Dabei wird davon ausgegangen, dass das zweite Gericht 145 zu einem Zeitpunkt t4, der vor dem Zeitpunkt t3 liegt, vollständig gegart ist und aus dem Gargerät 105 entfernt wird.

Das zweite Gericht 145 kann üblicherweise bei einer zweiten Gartemperatur T2 gegart werden. Diese Temperatur besteht im Garraum des Gargeräts 105 nur vorübergehend beim Auskühlen von der Gartemperatur T1 auf eine Umgebungstemperatur. Eine Dauer, die das zweite Gericht 145 im Garraum verbleiben soll, ist üblicherweise auf die Gartemperatur T2 bezogen. Die Dauer kann in Abhängigkeit des Temperaturverlaufs 305 angepasst werden, um ein sicheres und nicht übermäßiges Garen des zweiten Gerichts 145 zu steuern.

Eine dritte Fläche 330 zwischen den Zeitpunkten t4 und t3 unterhalb des zweiten Verlaufs 310 repräsentiert eine Energiemenge, die nach dem Garen des zweiten Gerichts 145 ungenutzt aus dem Gargerät 105 entweicht. Es ist zu erkennen, dass diese Energiemenge klein im Vergleich zu den anderen beschriebenen Energiemengen ist. Auf die hierin beschriebene Weise kann das Gargerät 105 daher mit gesteigerter Effizienz betrieben werden.

### Bezugszeichen

- 100: System
- 105: Gargerät
- 110: Vorrichtung
- 115: Verarbeitungseinrichtung
- 120: Interaktionseinrichtung
- 125: Datenspeicher
- 130: Küchenmaschine
- 135: Benutzer
- 140: erstes Gericht
- 145: zweites Gericht

- 200: Verfahren
- 205: Erfassen eines ersten Garvorgangs
- 210: Bestimmen eines Endes des ersten Garvorgangs
- 215: Bestimmen eines verwendeten Gargeräts
- 220: Bestimmen nutzbarer Restwärme
- 225: Erfassen einer Benutzervorgabe
- 230: Bestimmen eines Rezeptvorschlags
- 235: Anleiten zur Vorbereitung eines zweiten Garvorgangs
- 240: Steuern des zweiten Garvorgangs

- 305: erster Temperaturverlauf
- 310: zweiter Temperaturverlauf
- 315: Aktivierung Heizeinrichtung
- 320: erste Fläche: zum Garen des ersten Gerichts verwendete Energie
- 325: zweite Fläche: zum Garen des zweiten Gerichts verwendete Energie
- 330: dritte Fläche: ungenutzte Energie

## Patentansprüche

1. Verfahren (200) zum Nutzen von Restwärme in einem Gargerät (105), wobei das Verfahren (200) folgende Schritte umfasst:
- Bestimmen (220) einer Restwärme, die nach dem Garen eines ersten Gerichts (140) im Gargerät (105) zur Verfügung steht;
- Bestimmen (230) eines zweiten Gerichts (145), das mittels der Restwärme gegart werden kann.

2. Verfahren (200) nach Anspruch 1, wobei ein Temperaturverlauf im Gargerät (105) auf der Basis einer Temperatur und eines Abkühlverhaltens des Gargeräts (105) bestimmt wird.

3. Verfahren (200) nach Anspruch 1 oder 2, wobei ein Verlauf einer Temperatur im Gargerät (105) auf der Basis einer Temperatur beim Einlegen des zweiten Gerichts (145) und vom zweiten Gericht (145) umfassten Zutaten bestimmt wird.

4. Verfahren (200) nach Anspruch 2 oder 3, wobei eine Gardauer des zweiten Gerichts (145) auf der Basis des Verlaufs der Temperatur bestimmt wird.

5. Verfahren (200) nach einem der vorangehenden Ansprüche, wobei das zweite Gericht (145) auf der Basis einer benutzergesteuerten Vorgabe bestimmt wird.

6. Verfahren (200) nach einem der vorangehenden Ansprüche, wobei zu einem vorbestimmten zweiten Gericht (145) eine maximal mittels der Restwärme zu garende Menge bestimmt wird.

7. Verfahren (200) nach einem der vorangehenden Ansprüche, wobei ein Garen des zweiten Gerichts (145) im Gargerät (105) gesteuert (240) wird.

8. Verfahren (200) nach einem der vorangehenden Ansprüche, wobei Informationen zur Zubereitung des zweiten Gerichts (145) bereitgestellt (235) werden.

9. Verfahren (200) nach Anspruch 8, wobei die Informationen an eine Küchenmaschine (130) übermittelt (235) werden.

10. Verfahren (200) nach einem der vorangehenden Ansprüche, wobei das zweite Gericht (145) derart bestimmt wird, dass das erste Gericht (145) nicht vor dem Ende einer Vorbereitungszeit für das zweite Gericht (145) fertig gegart ist.

11. Vorrichtung (110) zur Nutzung von Restwärme in einem Gargerät (105), wobei die Vorrichtung umfasst:
- eine Einrichtung (140) zur Bestimmung einer Restwärme, die nach dem Garen eines ersten Gerichts (140) im Gargerät (105) zur Verfügung steht; und
- eine Einrichtung (115) zur Bestimmung eines zweiten Gerichts (145), das mittels der Restwärme gegart werden kann.
